# FASCICULE DE BREVET EUROPEEN

(11) **EP 2 261 076 B1**
(45) Date de publication et mention de la délivrance du brevet: **22.08.2012**
(21) Numéro de dépôt: 10164338.5
(22) Date de dépôt: 28.05.2010
(51) Int. Cl.: B60N 2/28, B60R 22/10

(54) **Siège auto pour enfant, destiné à équiper un siège de véhicule**
Autokindersitz zum Ausstatten eines Fahrzeugsitzes
Car seat for a child, intended for being installed on a seat of a vehicle

(30) Priorité: 15.03.2010 FR 1051840; 12.06.2009 FR 0953944; 27.10.2009 FR 0957547
(43) Date de publication de la demande: 15.12.2010
(73) Titulaire: Dorel France SA, 49309 Cholet Cedex (FR)
(72) Inventeur: Bossard, Jérôme, 49300, CHOLET (FR); Gautrat, Frédéric, 49300, CHOLET (FR)
(74) Mandataire: Bioret, Ludovic

(56) Documents cités:
- EP-A- 1 145 899
- EP-A1- 1 145 898
- EP-A2- 1 717 096
- WO-A2-2007/029010

## Description

### 1. Domaine de l'invention

Le domaine de l'invention est celui de la puériculture. Plus précisément, l'invention concerne les sièges auto pour enfant qui sont destinés à être installés sur les sièges passager des véhicules. Elle concerne en particulier la solidarisation de ces sièges auto pour enfant aux véhicules, notamment automobiles (cf. par exemple EP 1 145 898 A1, correspondant au préambule de la revendication indépendante.

### 2. Solutions de l'art antérieur

Pour la solidarisation des sièges auto au véhicule, est apparu depuis quelques années un nouveau type de sièges auto pour enfant répondant à la norme dite « Isofix » (marque déposée). Ces sièges auto pour enfant comportent un système d'ancrage comprenant des pinces de fixation, en général au nombre de deux, qui viennent se solidariser sur des points d'ancrage prévus dans le véhicule, et généralement accessibles entre le dossier et l'assise du siège de ce véhicule.

La réglementation indique qu'un troisième élément doit être prévu sur la structure du siège ou de l'embase, pour éviter que le siège auto ne bascule en cas d'accident, de choc ou de freinage brusque. Ce troisième élément est généralement assuré soit par une jambe de force soutenant la structure en prenant appui sur le sol du véhicule soit par une sangle anti-basculement du siège auto, encore appelée sangle de « top tether », solidarisant une partie supérieure de la structure du siège à un élément d'accrochage du véhicule prévu à cet effet.

Lorsqu'une telle sangle anti-basculement du siège auto est prévue, celle-ci doit présenter une longueur minimale de 2 m, fixée par la réglementation, pour permettre une solidarisation dans tout type de véhicule.

Certains des sièges auto comprenant une fixation de type Isofix et une sangle anti-basculement du siège auto peuvent être placés dos à la route pour un enfant en bas âge. D'autres sièges auto comprenant une fixation de type Isofix et une sangle anti-basculement du siège auto comprennent une embase ou un socle par rapport auquel la structure du siège auto peut être rotative. Le siège auto peut occuper plusieurs positions, par exemple une position de voyage face à la route, une position de voyage dos à la route et/ou une position d'installation face à la portière gauche ou droite du véhicule.

Un inconvénient de ce type de sièges auto connu est que la sangle anti-basculement du siège auto se trouve, lorsque le siège est en position dos à la route, au-dessus de l'enfant, et parfois même en contact avec la tête de celui-ci, ou alors est non tendue, ce qui peut être dangereux et/ou inconfortable pour l'enfant, qui a en permanence cette sangle au-dessus de lui.

La présence de cette sangle est par ailleurs gênante pour l'installation ou le retrait de l'enfant. Dans certains cas, les utilisateurs peuvent être conduits à retirer (ou modifier le trajet de) cette sangle pendant ces opérations, ce qui induit des manipulations supplémentaires (retrait et remise en place de la sangle) voire des risques d'oubli ou de mauvaise mise en place (« misuse » en anglais), dangereux pour l'enfant.

### 3. Objectifs de l'invention

L'invention vise notamment à pallier ces inconvénients de l'art antérieur.

En particulier, l'invention vise à fournir un siège auto sécurisé, mettant en oeuvre une sangle de dossier, ou « top tether », qui soit pratique et confortable dans son usage.

### 4. Exposé de l'invention

L'invention a pour objet un siège auto pour enfant, destiné à équiper un siège de véhicule, ledit siège auto pour enfant comprenant une structure comportant une assise et un dossier, et une sangle anti-basculement du siège auto passant par ou s'étendant à partir d'une partie supérieure dudit dossier et agencée pour être fixée à un élément d'accrochage du véhicule.

Selon l'invention, le siège auto comporte des moyens de guidage configurés pour guider ladite sangle anti-basculement du siège auto le long d'un seul des deux côtés dudit dossier dudit siège, lorsque ledit siège auto est utilisé dans une position dos à la route, de sorte à faciliter l'installation ou le retrait de l'enfant de l'autre côté dudit siège.

Ainsi, la sangle peut être guidée selon un côté du siège auto et non sur le dessus du siège auto.

Selon un mode de réalisation, les moyens de guidage peuvent comporter au moins un guide-sangle, disposé par exemple sur ledit dossier de manière à permettre le guidage de ladite sangle anti-basculement du siège auto le long d'un côté dudit dossier.

Le guide-sangle peut par exemple être placé dans une partie supérieure du dossier sur au moins un côté, voire sur les deux côtés du dossier.

De plus, lorsqu'il y a deux guides-sangle, un seul des guides-sangle est utilisé, et l'utilisateur peut choisir un des deux guides-sangle pour faciliter l'installation ou le retrait de l'enfant en fonction du côté du véhicule dans lequel le siège auto est installé.

En effet, si le siège auto est placé dos à la route, on peut faire passer la sangle par le guide-sangle selon un côté du siège auto de manière à faciliter l'installation et le retrait de l'enfant dans le siège auto, notamment si l'on choisit le guide-sangle disposé du côté intérieur du véhicule et non du côté de la portière du véhicule la plus proche du siège auto.

De plus, la sangle n'étant pas disposée au-dessus de l'enfant mais à côté de celui-ci, elle ne gêne pas l'enfant installé dans le siège auto.

Le guide-sangle peut consister par exemple en un élément fixé sur la structure ou, en variante formé d'un seul tenant avec la structure, par exemple par moulage de matière, par exemple en forme d'agrafe. Le guide-sangle peut également consister, au moins en partie, en une forme du dossier permettant un guidage naturel. Le guide-sangle peut présenter une couleur différente du dossier pour être immédiatement identifié par l'utilisateur.

Le siège auto peut comporter une embase, l'assise et le dossier formant une structure du siège auto, la structure pouvant être dans ce cas liée à l'embase. Dans ce cas, la structure peut être mobile en rotation et/ou en translation relativement à l'embase.

Le siège auto peut être configuré pour pouvoir occuper une position de voyage dos à la route.

Le siège auto peut en particulier être adapté pour une position de voyage dos à la route et/ou une position de voyage face à la route.

Lorsque le siège auto est dans une position face à la route, le ou les guides-sangle peuvent être non utilisés. Il peut même être préférable voire indispensable de ne pas les utiliser dans cette position, car cela pourrait s'avérer dangereux. La forme du guide-sangle peut dans ce but être adaptée de manière à faire en sorte que, lorsque le siège auto passe de la position dos route à la position face route, la sangle sorte naturellement du guide-sangle. Lorsque le siège auto est dans une position dos à la route, un ou le guide-sangle peut être utilisé, de manière à guider la sangle et généralement à en dévier le chemin le plus court pour avoir un chemin de sangle choisi et confortable pour l'utilisation du siège auto.

### 5. Liste des figures

D'autres caractéristiques et avantages de l'invention apparaîtront plus clairement à la lecture de la description suivante de modes de réalisation de l'invention, donnés à titre d'exemples illustratifs et non limitatifs, et des dessins annexés, parmi lesquels :
- la figure 1 représente de façon schématique en perspective en vue de derrière un exemple de siège auto selon l'invention, prêt à être installé sur un siège d'un véhicule ;
- la figure 2 représente de manière schématique et en perspective le siège auto de la figure 1 représenté après avoir fait pivoter la structure du siège relativement à l'embase d'environ 90° ;
- la figure 3 représente de matière schématique, en perspective le siège auto de la figure 1 que l'on a fait tourner de 180°, de manière à pouvoir l'installer dos à la route dans le véhicule ;
- les figures 4A à 4C sont des vues agrandies et schématiques de trois modes de réalisation du guide-sangle du siège auto des figures 1 à 3 ;
- la figure 5 représente un autre exemple de siège auto comportant deux guides-sangle, conforme à l'invention ;
- les figures 6 et 7 montrent le siège de la figure 5, respectivement dans une position face à la route et dans une position dos à la route.

### 6. Description détaillée de modes de réalisation particuliers

### 6.1 principe de l'invention

L'invention propose donc de guider la sangle anti-basculement du siège auto reliée à la partie supérieure du dossier d'un siège auto (sangle de haut de têtière, ou de « top tether ») le long d'un côté (partie latérale) du dossier de ce siège (et non au-dessus de celui-ci), lorsque ledit siège auto est utilisé dans une position dos à la route.

Ainsi, l'enfant n'a pas en permanence une sangle au-dessus de lui, et son installation et son retrait ne sont pas perturbés par cette sangle.

L'invention s'applique notamment aux sièges auto pouvant prendre une position dos à la route (dans laquelle la sangle est guidée sur le côté du dossier) et une position face à la route (dans laquelle la sangle s'étend, classiquement, depuis l'arrière du dossier). Cependant, l'invention s'applique également au cas d'un siège pouvant être monté uniquement dos à la route.

Par ailleurs, bien qu'il soit possible de prévoir un guidage sur un seul côté, pour des raisons de simplification ou de coût, on prévoira généralement deux moyens symétriques, de chaque côté du dossier, de façon à permettre le choix du côté sur lequel passe la sangle, en fonction du côté où est installé le siège auto dans le véhicule (de façon par exemple que la sangle passe du côté éloigné de la portière, pour ne pas interférer avec l'installation et le retrait de l'enfant ou, au contraire, de façon que la sangle passe du côté de la portière du fait de l'emplacement des points d'ancrage du véhicule qui peuvent être côté portière, afin d'avoir un trajet plus court).

### 6.2 premier mode de réalisation

>

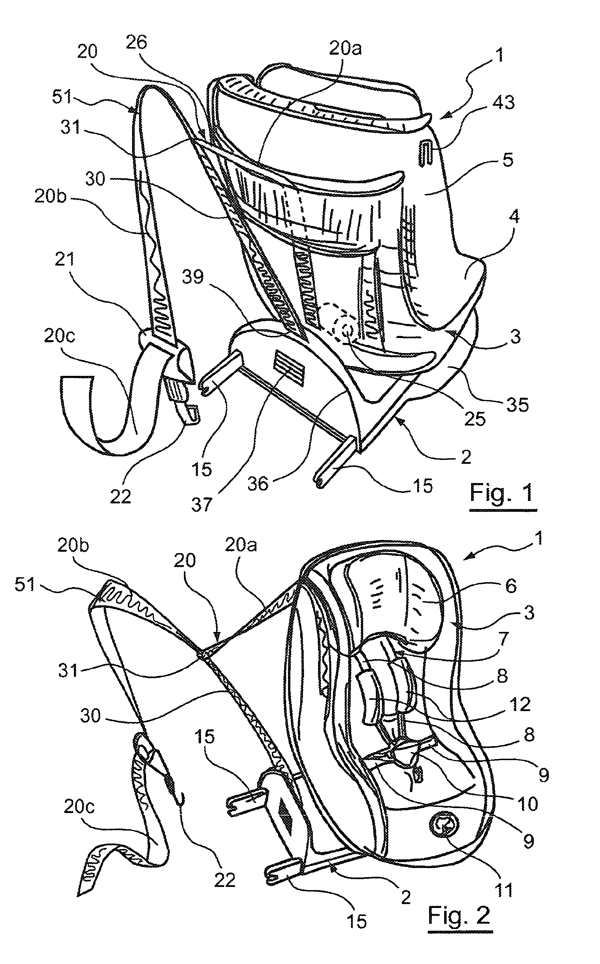

Le siège auto illustré sur les figures 1 à 3, déjà décrit dans le document non publiée n° 0957547 dont la présente demande revendique la priorité est commenté ci-après.

Le siège auto 1 comporte une embase 2 et une structure, ou fauteuil, 3 liée à l'embase, la structure 3 comprenant une assise 4 et un dossier 5. Comme visible sur la figure 2, le siège auto 1 comporte, dans l'exemple illustré, une têtière 6, ou appui-tête, ainsi qu'un harnais 7 comprenant deux bretelles 8 et deux sangles ventrales 9. Les bretelles 8 et les sangles ventrales 9 sont destinées à être rassemblées et fixées dans une boucle de fixation 10 de manière à maintenir un enfant assis dans le siège. Des fourreaux 12 forment des manchons entourant chacun des bretelles 8 du harnais 7 et ont pour rôle d'améliorer la retenue de l'enfant au cours d'un choc.

Dans l'exemple illustré, la structure 3 est mobile en rotation relativement à l'embase 2. Les moyens enclenchant la rotation, par exemple des poignées, n'ont pas été représentés, dans un souci de clarté du dessin. Un bouton 11 situé à l'avant du siège auto 1 peut permettre en outre l'inclinaison de la structure 3 relativement à l'embase 2. L'invention s'applique également aux cas où le siège auto est uniquement réglable en inclinaison et non en rotation, même si ce mode de réalisation n'est pas spécifiquement illustré sur les figures. L'invention s'applique également aux sièges auto réglables uniquement en rotation et aux siège auto dos à la route réglables en inclinaison.

L'invention s'applique également au cas où le siège auto est non rotatif, mais par exemple peut être disposé en position de voyage dos à la route.

La structure 3 comporte un revêtement, visible sur les figures, généralement réalisé en tissu, de manière connue en soi.

Le siège auto 1 comprend les moyens de solidarisation au véhicule suivants.

L'embase 2 peut comporter un système d'ancrage comprenant dans l'exemple illustré deux points de fixation, sous la forme de deux pinces 15 correspondant à la norme Isofix, agencées pour être solidarisées à des points d'ancrage prévus à cet effet dans le véhicule.

Un troisième point de fixation est formé par des moyens anti-basculement comportant une sangle, dite notamment sangle anti-basculement du siège auto 51. Dans l'exemple illustré sur les figures 1 à 3, les moyens anti-basculement comportent trois brins de sangle, un premier brin 20b étant agencé pour être fixé au véhicule, notamment à un élément d'accrochage du véhicule, un deuxième brin 30 étant agencé pour être fixé à l'embase et un troisième brin 20a étant agencé pour être fixé à la structure du siège auto, les trois brins étant réunis en un point 31 de réunion des moyens anti-basculement.

Dans l'exemple illustré sur les figures 1 à 3, les premier et troisième brins 20b et 20a forment des extrémités d'une même sangle 20 à laquelle on a fixé de façon permanente un deuxième brin 30.

Les moyens anti-basculement comportent une boucle 21 portant un crochet 22 d'accrochage du premier brin 20b à un élément d'accrochage du véhicule. Le premier brin 20b se prolonge dans cet exemple au-delà de la boucle 21 par une portion de sangle de réglage 20c et de longueur variable en fonction de l'ajustement nécessaire au moment de la fixation du crochet 22 au véhicule.

Dans l'exemple illustré, le premier brin 20b est relié au crochet 22 destiné à être fixé au véhicule et s'étend entre la boucle 21 et le point 31 de réunion des trois brins.

Le deuxième brin 30 s'étend entre une extrémité destinée à être fixée à l'embase et le point 31 de réunion des trois brins.

Le troisième brin 20a s'étend entre une extrémité destinée à être fixée à la structure et le point 31 de réunion des trois brins.

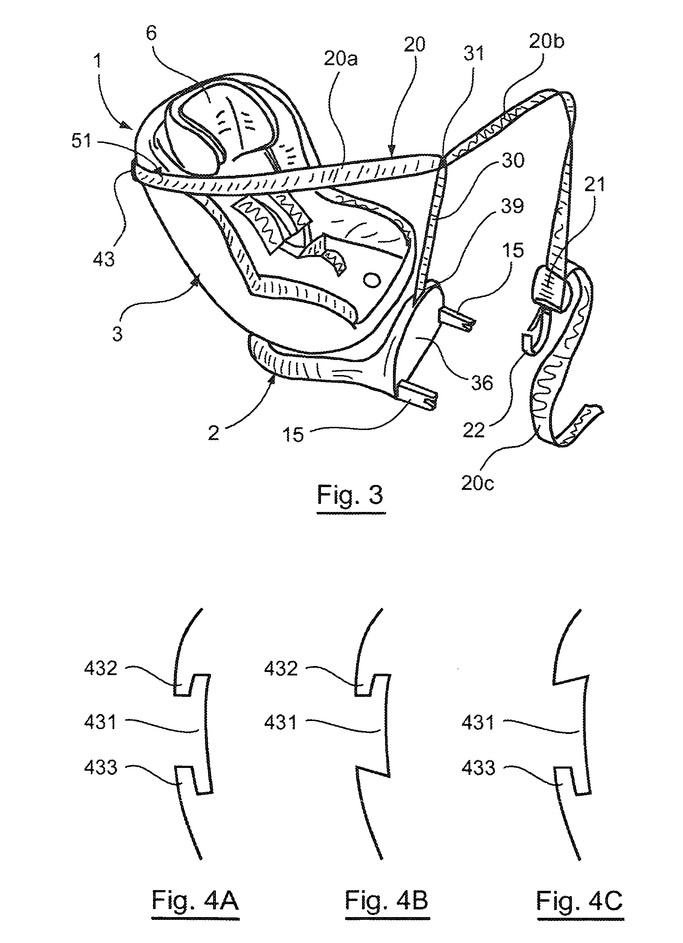

Comme illustré sur les figures 1 à 3, le siège auto, de par la rotation possible de la structure 3 relativement à l'embase 2, peut occuper une position d'installation illustrée sur la figure 2, une position de voyage face à la route illustrée sur la figure 1 et une position de voyage dos à la route illustrée sur la figure 3, l'embase 2 étant configurée pour rester fixe relativement au siège du véhicule une fois qu'elle est solidarisée à celui-ci, par exemple à l'aide des pinces 15.

Dans ce siège auto, la tension des moyens anti-basculement est assurée par le premier brin lorsque celui-ci est fixé au véhicule et par le deuxième brin lorsque celui-ci fixé à l'embase.

Le troisième brin, fixé à la structure du siège auto et présentant une longueur ou une extensibilité variable et suffisante, permet le mouvement en rotation et/ou en inclinaison de la structure par rapport à l'embase, sans modifier la tension des premier et deuxième brins de sangle.

Le siège auto 1 comporte, pour permettre cette longueur variable, dans cet exemple illustré, un dispositif enrouleur 25 visible en pointillés sur la figure 1, destiné à recevoir une portion du troisième brin 20a, sous forme enroulée. Dans l'exemple illustré, le dispositif enrouleur 25 est intégré dans la structure du siège auto, notamment en bas du dossier et n'est donc pas visible depuis l'extérieur du siège auto. Le dispositif enrouleur 25 comporte un élément de rappel sous la forme par exemple d'un ressort, non visible sur les figures, pour permettre l'enroulement automatique du troisième brin afin d'en assurer la tension permanente.

Le dossier 5 de la structure du siège auto 1 présente dans l'exemple illustré une ouverture transversale 26 formée sur l'arrière du dossier, s'étendant sur une grande portion de la largeur du dossier et au travers de laquelle circule le troisième brin 20a. La largeur de cette ouverture transversale 26 peut être déterminée de manière à ce que la variation de la tension des moyens anti-basculement lors d'une éventuelle rotation de la structure d'environ 90° soit minime lorsque le siège auto est fixé au véhicule.

Comme illustré sur les figures 1 à 3, le premier brin 20b s'étend d'abord vers le haut avant de redescendre vers le bas, en suivant la forme du dossier du siège du véhicule. En effet, même si, sur les figures 1 à 3, le siège auto 1 est représenté seul, non solidarisé au siège du véhicule, la forme et la hauteur du siège du véhicule feront que le premier brin 20b s'étendra comme illustré, à savoir vers le haut puis vers le bas, participant à la tension du deuxième brin 30 lorsque le siège auto est fixé au siège du véhicule, à l'aide des pinces 15 et du crochet 22 dans cet exemple.

L'embase 2, dans cet exemple, se présente sous forme d'un plateau 35 sensiblement parallèle à l'assise 4, à une extrémité duquel s'étend vers le haut une portion d'extension 36 sensiblement parallèle au dossier du siège du véhicule. Dans cette portion d'extension 36 de l'embase 2 est logé un détecteur 37 de tension du système de fixation. Un indicateur de tension, ou de non jeu, est prévu sur une partie visible, par l'utilisateur, du siège auto, de manière à délivrer à l'utilisateur une information relative à la tension de la sangle anti-basculement du siège auto.

L'indicateur de tension peut par exemple se présenter sous forme d'une information colorée, par exemple verte si la tension est bonne, et rouge si la tension n'est pas suffisante. L'indicateur et/ou détecteur de tension des moyens anti-basculement peut être mécanique ou électronique. Dans cet exemple, le deuxième brin 30 pénètre à l'intérieur de la portion d'extension 36 de l'embase 2 par une ouverture, par exemple une ouverture 39 formée en partie supérieure de la portion d'extension 36 comme illustré sur les figures 1 et 3, ou une ouverture disposée à un autre endroit, formée dans l'embase.

Dans l'exemple illustré, la structure 3 comporte, outre les éléments déjà décrits ci-dessus, et conformément à la présente invention, des moyens de guidage comportant, dans cet exemple, au moins un guide-sangle 43, deux dans l'exemple illustré dont un seul est visible sur la figure 1. Dans cet exemple, les guide-sangle sont situés en haut et latéralement de chaque côté du dossier 5 de la structure 3 du siège auto, de manière à recevoir et guider la sangle anti-basculement du siège auto, notamment, dans cet exemple, le troisième brin 20a de sangle, en particulier voire exclusivement lorsque le siège auto est fixé dans la position de voyage dos à la route comme illustré sur la figure 3.

Les figures 4A à 4C illustrent à titre d'exemples trois modes de réalisation d'un guide-sangle 43. Ces différents guide-sangle présentent un logement 431 destiné à recevoir la sangle, et une ou deux lèvres 432, 433, fermant partiellement ce logement 431 de façon à éviter que la sangle ne sorte du logement 431. Ainsi, la sangle est guidée en translation sensiblement perpendiculairement au plan de coupe des figures 4A à 4C, et maintenue dans ce logement. La forme peut être réalisée de manière à assurer un retrait naturel de la sangle hors du guide-sangle, en position du siège auto face à la route.

La forme et la dimension des lèvres 432 et/ou 433 sont choisies de façon à optimiser un compromis entre la facilité d'installation et de retrait de la sangle, et l'efficacité du maintien et du guidage.

Les guide-sangle peuvent être formés dans la masse du dossier, ou être une pièce rapportée, par exemple en métal. Ils sont constitués, et le cas échéant fixés, de façon à résister aux chocs et déplacements éventuels, dans le respect des normes.

Il est possible de prévoir des capteurs dans les guide-sangle, pour contrôler la présence de la sangle (combinés de préférence à une logique adaptée, puisqu'un seul des guide-sangle doit être utilisé, et uniquement dans la position dos à la route).

On peut également prévoir un élément mobile, formant clapet, pour fermer le logement 431 une fois que la sangle y est introduite.

### 6.3 deuxième mode de réalisation

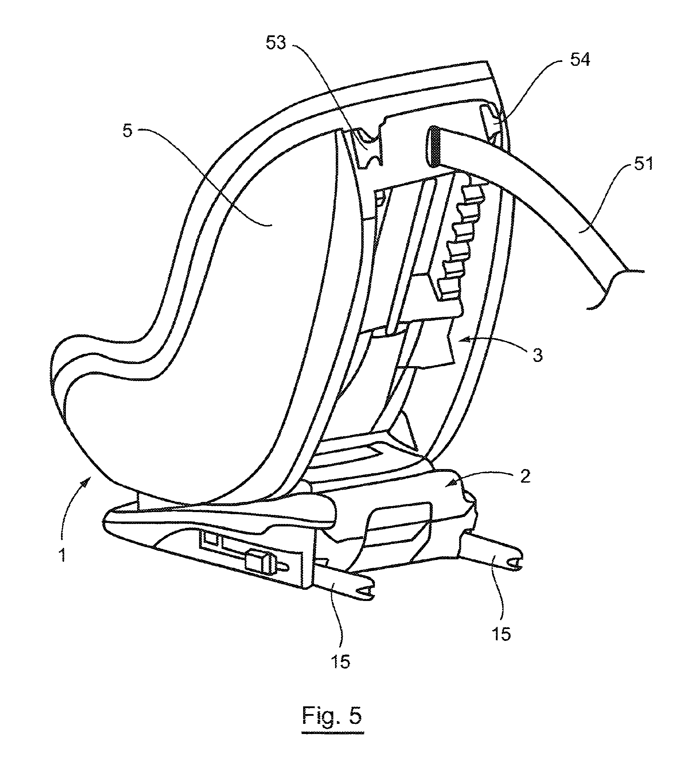

Les figures 5 à 7 illustrent un autre mode de réalisation de l'invention, dans lequel les guide-sangle peuvent être similaires à ceux décrits ci-dessus.

Comme cela apparaît sur la figure 5, le fauteuil 1 est monté sur une embase 2, présentant des pinces Isofix 15. Le dossier 5 porte par ailleurs une sangle anti-basculement du siège auto 51.

Dans un mode de réalisation, celle-ci est solidarisée à la partie supérieure du dossier via un ourlet formé autour d'un anneau (non visible sur la figure, car logé à l'intérieur du dossier dans ce mode de réalisation). Contrairement à l'approche classique, selon laquelle l'anneau est monté horizontalement, il est ici monté de façon à s'étendre verticalement.

Ceci permet d'éviter un écrasement de l'ourlet, lorsque la sangle sera guidée latéralement à l'aide des guide-sangle 53, 54, comme décrit ci-après, et donc un risque de variation de la tension de la sangle, au cours du temps, et/ou en cas de choc.

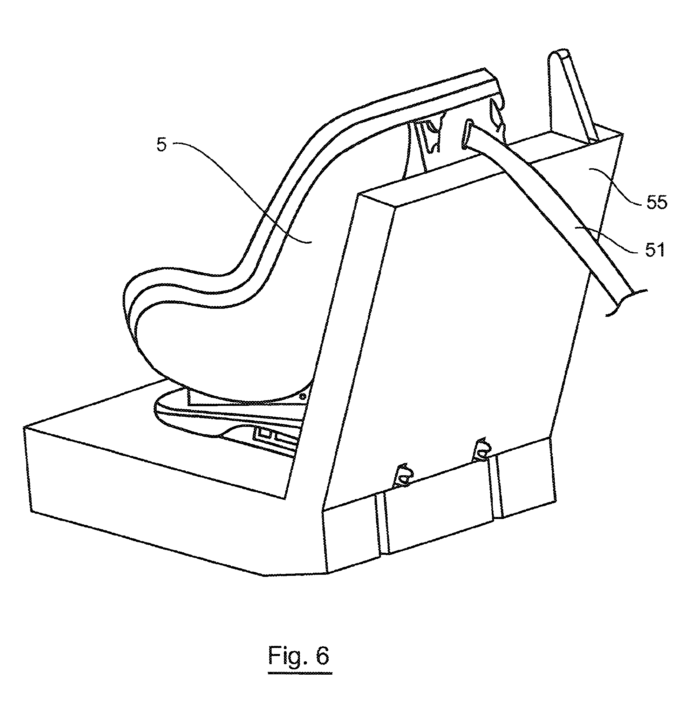

Dans la position face à la route, illustrée sur la figure 6, la sangle 51 s'étend classiquement depuis l'arrière du dossier 5, au-dessus du dossier 55 du siège du véhicule.

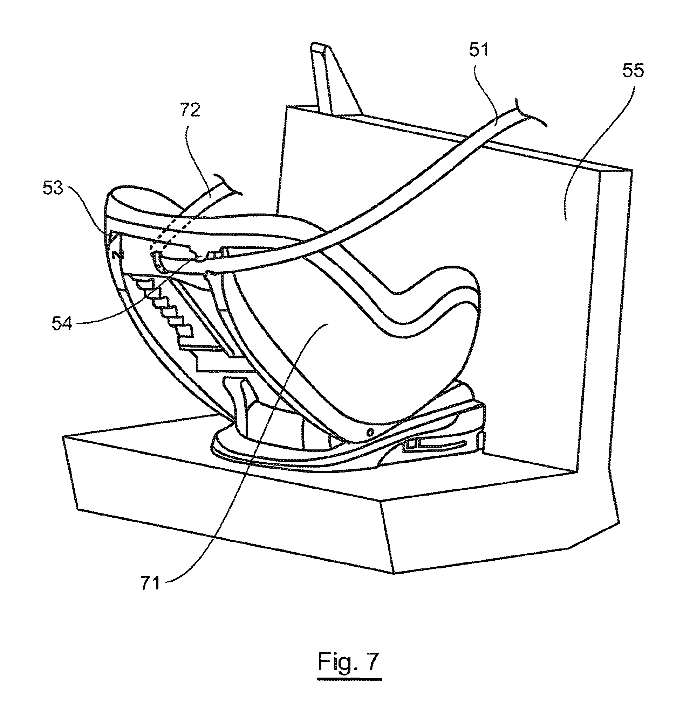

Dans la position dos à la route, illustrée par la figure 7, la sangle 51 est placé dans le guide-sangle 54, de façon qu'elle circule sur le côté (la partie latérale) 71 du dossier 5 (et non, classiquement, au-dessus du dossier, comme illustré par les pointillés 72).

De façon symétrique, on peut utiliser le guide-sangle 53, de l'autre côté du siège, en fonction de sa position dans le véhicule.

### 6.4 autres aspects

Bien sûr, l'invention n'est pas limitée aux exemples qui viennent d'être décrits.

En particulier, alternativement au(x) guide-sangle, les moyens de guidage peuvent comprendre un anneau mobile à l'arrière du dossier (par exemple dans la fente de l'exemple de la figure 1) pour l'amener à droite ou à gauche.

En variante, les moyens de guidage peuvent comprendre des moyens d'accrochage présents sur la sangle anti-basculement du siège auto à son extrémité, pouvant se solidariser à des moyens complémentaires, dans les trois positions possibles (position dos à la route, face à la route ou installation, le cas échéant).

Dans toute la description, les expressions « comportant un » et « comprenant un » doivent être comprises comme étant synonymes respectivement des expressions « comportant au moins un » et « comprenant au moins un », sauf si le contraire est spécifié.

## Revendications

1. Siège auto (1) pour enfant, destiné à équiper un siège de véhicule, ledit siège auto (1) pour enfant comportant une assise (4) et un dossier (5), et comprenant une sangle anti-basculement (51) du siège auto passant par ou s'étendant à partir d'une partie supérieure dudit dossier (5) et agencée pour être fixée à un élément d'accrochage du véhicule,
**caractérisé en ce qu'**il comporte des moyens de guidage configurés pour guider ladite sangle anti-basculement (51) du siège auto le long d'un seul des deux côtes dudit dossier (5) dudit siège (1), lorsque ledit siège auto est utilisé dans une position dos à la route, de sorte à faciliter l'installation ou le retrait de l'enfant de l'autre côté dudit siège.

2. Siège auto selon la revendication 1, **caractérisé en ce que** les moyens de guidage comportent au moins un guide-sangle (43 ; 53, 54) disposé sur ledit dossier (5) de manière à permettre le guidage.

3. Siège auto selon la revendication 2, **caractérisé en ce qu'**il comprend deux guide-sangle (43 ; 53, 54) placés respectivement sur l'un et l'autre des deux côtés du dossier (5).

4. Siège auto selon l'une des revendications 2 et 3, **caractérisé en ce que** le guide-sangle (43 ; 53, 54) consiste en un élément fixé sur la structure dudit dossier (5).

5. Siège auto selon l'une des revendications 2 et 3, **caractérisé en ce que** le guide-sangle (43 ; 53, 54) consiste en un élément formé d'un seul tenant avec la structure dudit dossier, notamment en forme d'agrafe.

6. Siège auto selon l'une quelconque des revendications 2 à 5, **caractérisé en ce que** le guide-sangle (43 ; 53, 54) consiste au moins en partie en une forme du dossier (5) permettant un guidage naturel.

7. Siège auto selon l'une quelconque des revendications 2 à 6, **caractérisé en ce que** le guide-sangle (43 ; 53, 54) présente une couleur différente du dossier (5) pour être immédiatement identifié par l'utilisateur.

8. Siège auto selon l'une quelconque des revendications précédentes, **caractérisé en ce qu'**il comporte une embase (2), l'assise (4) et le dossier (5) formant une structure (3) du siège auto, la structure (3) étant liée à l'embase.

9. Siège auto selon la revendication précédente, **caractérisé en ce que** la structure (3) est mobile en rotation et/ou en translation relativement à l'embase (2).

## Claims

1. A child's car seat (1), intended to equip a vehicle seat, the child's car seat (1) comprising a seat member (4) and a backrest (5), and comprising an anti-tilting strap (51) for the car seat which extends via or which extends from an upper portion of the backrest (5) and which is arranged so as to be fixed to a fastening element of the vehicle,
**characterised in that** it comprises guiding means which are configured to guide the anti-tilting strap (51) of the car seat along only one of the two sides of the backrest (5) of the seat (1), when the car seat is used in a back-to-the-road position, in order to facilitate the placement or the removal of the child at the other side of the seat.

2. A car seat according to claim 1, **characterised in that** the guiding means comprise at least one strap guide (43; 53, 54) which is arranged on the backrest (5) in order to allow the guiding.

3. A car seat according to claim 2, **characterised in that** it comprises two strap guides (43; 53, 54) which are placed at one and the other of the two sides of the backrest (5), respectively.

4. A car seat according to either claim 2 or claim 3, **characterised in that** the strap guide (43; 53, 54) comprises an element which is fixed to the structure of the backrest (5).

5. A car seat according to either claim 2 or claim 3, **characterised in that** the strap guide (43; 53, 54) comprises an element which is formed in one piece with the structure of the backrest, in particular in the form of a clamp.

6. A car seat according to any one of claims 2 to 5, **characterised in that** the strap guide (43; 53, 54) comprises at least in part a shape of the backrest (5) which allows natural guiding.

7. A car seat according to any one of claims 2 to 6, **characterised in that** the strap guide (43; 53, 54) has a different colour to the backrest (5) in order to be immediately identified by the user.

8. A car seat according to any one of the preceding claims, **characterised in that** it comprises a base (2), the seat (4) and the backrest (5) forming a structure (3) of the car seat, the structure (3) being connected to the base.

9. A car seat according to the preceding claim, **characterised in that** the structure (3) can be moved in terms of rotation and/or in translation relative to the base (2).

## Patentansprüche

1. Kinder-Autositz (1), vorgesehen zur Ausrüstung eines Fahrzeugsitzes, wobei der Kinder-Autositz (1) ein Sitzteil (4) und eine Rückenlehne (5) aufweist, und einen Kippschutz-Gurt (51) des Autositzes aufweist, welcher an einem oberen Teil der Rückenlehne (5) vorbei verläuft oder sich von dort aus erstreckt, und so angeordnet ist, dass er an einem Haken-Element des Fahrzeugs befestigt wird,
**dadurch gekennzeichnet, dass** er Führungsmittel aufweist, die dazu eingerichtet sind, den Kippschutz-Gurt (51) des Autositzes entlang einer der beiden Seiten der Rücklehne (5) des Sitzes (1) derart zu führen, wenn der Autositz in einer Position mit dem Rücken in Richtung der Straße verwendet wird, dass die Installation oder Entfernung des Kindes auf der anderen Seite des Sitzes erleichtert wird.

2. Autositz gemäß Anspruch 1, **dadurch gekennzeichnet, dass** die Führungsmittel wenigstens einen Führungs-Gurt (43; 53; 54) aufweisen, welcher an der Rückenlehne (5) derart angeordnet ist, dass die Führung ermöglicht wird.

3. Autositz gemäß Anspruch 2, **dadurch gekennzeichnet, dass** er zwei Führungs-Gurte (43; 53, 54) aufweist, welche jeweils auf der einen und der anderen der beiden Seiten der Rückenlehne (5) platziert sind.

4. Autositz gemäß einem der Ansprüche 2 oder 3, **dadurch gekennzeichnet, dass** der Führungs-Gurt (43; 53, 54) aus einem Element besteht, welches an der Struktur der Rückenlehne (5) befestigt ist.

5. Autositz gemäß einem der Ansprüche 2 oder 3, **dadurch gekennzeichnet, dass** der Führungs-Gurt (43; 53, 54) aus einem Element besteht, welches einstückig mit der Struktur der Rückenlehne ausgebildet ist, insbesondere in der Form einer Klammer.

6. Autositz gemäß einem der Ansprüche 2 bis 5, **dadurch gekennzeichnet, dass** der Führungs-Gurt (43; 53, 54) zumindest teilweise aus einer Form der Rückenlehne (5) besteht, welche eine natürliche Führung erlaubt.

7. Autositz gemäß einem der Ansprüche 2 bis 6, **dadurch gekennzeichnet, dass** der Führungs-Gurt (43; 53, 54) eine von der Rückenlehne (5) verschiedene Farbe besitzt, um unmittelbar von dem Benutzer identifiziert zu werden.

8. Autositz gemäß einem der vorstehenden Ansprüche, **dadurch gekennzeichnet, dass** er eine Basis (2) aufweist, wobei der Sitzteil (4) und die Rückenlehne (5) eine Struktur (3) des Autositzes bilden, wobei die Struktur (3) mit der Basis verbunden ist.

9. Autositz nach dem vorstehenden Anspruch, **dadurch gekennzeichnet, dass** die Struktur (3) rotatorisch und/oder translatorisch relativ zu der Basis (2) bewegbar ist.
